# EUROPÄISCHE PATENTSCHRIFT

(11) **EP 2 952 155 B1**
(45) Veröffentlichungstag und Bekanntmachung des Hinweises auf die Patenterteilung: **22.07.2020**
(21) Anmeldenummer: 14171444.4
(22) Anmeldetag: 06.06.2014
(51) Int. Cl.: A61C 5/73, A61C 13/083

(54) **Dentalkeramik-Erzeugungsvorrichtung**
Dental ceramic production device
Dispositif de fabrication de céramique dentaire

(43) Veröffentlichungstag der Anmeldung: 09.12.2015
(73) Patentinhaber: Ivoclar Vivadent AG, 9494 Schaan (LI)
(72) Erfinder: Bürke, Harald, 6820 Frastanz (AT); Spiegel, Michael, 88131 Lindau (DE); Voigt, Oliver, 9477 Trübbach (CH)
(74) Vertreter: Baronetzky, Klaus

(56) Entgegenhaltungen:
- WO-A1-2008/103024
- US-A1- 2008 142 183
- US-A1- 2008 153 069
- US-B1- 7 691 497

## Beschreibung

Die Erfindung betrifft eine Dentalkeramik-Erzeugungsvorrichtung.

Es ist seit längerem bekannt, unter Verwendung von dreidimensionalen Scandaten aus dem Mund eines Patienten eine Dentalrestauration herzustellen. Ein Beispiel hierfür ist das aus der WO 95/28688 A1 bekannte Verfahren, gemäß welchem per Rapid-Prototyping ein Positivmodell hergestellt wird, das als Basis für die Abformung einer Negativform oder verlorenen Form dienen kann.

Es ist auch seit langem bekannt, Keramiken, die sich in mindestens einem Parameter unterscheiden, in geeigneter Weise zusammenzuführen und zusammen für die Bereitstellung der Dentalrestauration zu verwenden. So ist gemäß der EP 0 781 530 A2 eine tetragonal stabilisierte Zirkonoxidkeramik als Verstärkungselement vorgesehen, die von einer Verblendkeramik umhüllt ist. Die Verblendkeramik kann auch verschiedenfarbig sein und auf die Verstärkungskeramik aufgebrannt oder aufgepresst werden (vgl. z.B. Anspruch 10).

Ein weiteres Beispiel für unterschiedliche Dentalkeramikmaterialien, auch mit Füllstoffen, die auch miteinander kombiniert werden können, lässt sich aus der US 6,345,984 B2 entnehmen. Es ist auch bereits vorgeschlagen worden, zwei zueinander passende Formen von Einzelkomponenten für eine Dentalrestauration in einem CAD/CAM-Verfahren herzustellen und diese miteinander in einem Fügeschritt zu verbinden. Diese Lösung ist jedoch recht aufwändig und führt zu einer bestimmten Ungewissheit der Höhenlage, je nach Dicke der manuell aufgetragenen Klebeschicht zwischen den Einzelkomponenten.

Ferner ist es bereits vorgeschlagen worden, zwei unterschiedlich gefärbte Keramikmassen zusammenzupressen und an dem Zubringerkanal an geeigneter Stelle eine Ausbuchtung anzubringen, um dadurch den Anteil einer der Keramikmassen an der fertigen Dentalrestauration zu reduzieren. Diese Lösung hat sich jedoch in der Praxis ebenfalls nicht durchgesetzt; für die Festlegung des Übergangs sind meist Probepressungen erforderlich, so dass dieses Verfahren vom Aufwand her nicht gerechtfertigt ist.

US 2008/153069 A1 offenbart eine Vorrichtung zur Dentalkeramik-Erzeugung umfassend eine CAD-/ CAM-Vorrichtung, wobei der Zubringerkanal an den Form-Hohlraum automatisch angepasst werden kann.

Demgegenüber liegt der Erfindung die Aufgabe zugrunde, eine Dentalkeramik-Erzeugungsvorrichtung bereitzustellen, die leichter zu beherrschen ist und zuverlässig die Erzeugung einer Dentalkeramik aus mindestens zwei unterschiedlichen Keramikarten ermöglicht.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass die CAM-Vorrichtung eine automatische Festlegung der Verteilung und des Übergangs zwischen den verschiedenen Keramikarten vornimmt. Dies geschieht, indem die Lage des Zubringerkanals, die Abmessungen des Zubringerkanals, die relative Höhe des Zubringerkanals bezogen auf den Presshohlraum einerseits, aber auch auf den Muffeldorn, der dem Presskanal entspricht, andererseits von der CAM-Vorrichtung beim Erstellen des Positivmodells automatisch eingestellt wird.

Dies geschieht, indem die Lage des Zubringerkanals, der dem Presskanal entspricht, die Abmessungen des Zubringerkanals, die relative Höhe des Zubringerkanals bezogen auf den Muffeldorn einerseits, aber auch auf den Presshohlraum andererseits von der CAM-Vorrichtung beim Erstellen des Positivmodells automatisch eingestellt wird.

Hierzu wird zunächst ein Rohling mit einer vorbekannten Verteilung von Keramikarten, die sich mindestens hinsichtlich eines Parameters unterscheiden, verwendet. Die Dentalrestauration soll nun erfindungsgemäß ebenfalls aus mindestens zwei Keramikarten bestehen, aber die Verteilung und der Übergang müssen nicht mit der Verteilung und dem Übergang bei dem Keramikrohling übereinstimmen. Hierzu wird erfindungsgemäß vielmehr in überraschend einfacher Weise der Zubringerkanal verwendet, der von der CAM-Vorrichtung zielkonform bereitgestellt wird. Beispielsweise ergibt eine im Querschnitt keilförmige Ausgestaltung des Zubringerkanals, dass die der Keilspitze benachbarte Keramikart einen größeren Strömungswiderstand hat, so dass sich der Übergang und die Verteilung bei der Dentalrestauration stärker zu der anderen Art hin verlagert.

Damit besteht auch die Möglichkeit, zwei sehr unterschiedliche Keramikarten zu verwenden, die sich beispielsweise hinsichtlich eines Parameters um 80% unterscheiden, aber durch eine geringere Höhe des Zubringerkanals einen Unterschied von lediglich beispielsweise 40% bei den Keramikarten der Dentalkeramik einzustellen.

Nachdem die CAM-Vorrichtung per Rapid-Prototyping oder auch auf beliebige andere geeignete Weise den Zubringerkanal zusammen mit dem Press-Hohlraum erzeugt, ist es leicht möglich, vorab und damit fehlerfrei eine entsprechende Relativposition zu gewährleisten, und damit auch die Verteilung und den Übergang - ohne die Notwendigkeit der manuellen Nachbearbeitung - automatisch vorzugeben.

Es ist beispielsweise auch ohne Weiteres möglich, eine seitliche Einschnürung in dem Zubringerkanal vorzusehen, die beispielsweise bauchig ausgebildet sein kann, und hierdurch eine Spreizung der Verteilung und des Übergangs an der Dentalkeramik im Vergleich zu dem Rohling zu realisieren.

Typischerweise weist ein erfindungsgemäßer Zubringerkanal eine Höhe auf, die wesentlich größer als seine Stärke ist. Mit Höhe ist die Richtung des Änderungsverlaufs der Keramikarten, und zwar sowohl bei dem Pressrohling als auch bei der Dentalrestauration gemeint. Typischerweise werden über den Zubringerkanal dementsprechend obere Bereiche des Pressrohlings oberen Bereichen der Dentalkeramik zugeführt, und umgekehrt untere Bereiche der Dentalkeramik unteren Bereichen des Pressrohlings.

In vorteilhafter Ausgestaltung der erfindungsgemäßen Vorrichtung ist es vorgesehen, dass sich mehrere Dentalrestaurationen zusammen mit entsprechenden Zubringerkanälen von dem Presskanal oder Muffeldorn weg erstrecken. Die Zubringerkanäle können über eine gemeinsame Zubringerbasis miteinander verbunden sein und gemeinsam per Rapid-Prototyping - oder aber auch per Fräsen - hergestellt sein. Alternativ kann auch jeder Zubringerkanal zusammen mit dem zugehörigen Positivmodell der Dentalrestauration separat hergestellt werden, wobei dann die Zubringerkanäle mit ihren Einströmenden an dem Muffeldorn befestigt werden, der dann zugleich einen entsprechenden Höhenanschlag bietet.

Die Dentalrestaurationen erstrecken sich bevorzugt kreisförmig um den Muffeldorn bzw. den entsprechenden Presskanal herum und halten einen Randabstand zur Außenwand der Muffel ein, welcher 10mm nicht unterschreiten sollte. Zugleich halten die Dentalrestaurationen auch zueinander einen Abstand von beispielsweise 3 oder 4 mm ein.

Nach Erstellung der Anordnung von Dentalrestaurationen und Zubringerkanälen per Rapid-Prototyping wird diese Anordnung in geeigneter Weise auf dem Muffeldorn angebracht und dort befestigt. In an sich bekannter Weise wird ein Silikonring auf eine Muffelbasis aufgeschoben und dann die Einheit aus Muffelbasis, Muffeldorn und vorgefertigten Positivmodellen einschließlich der Zubringerkanäle mittels einer geeigneten aushärtbaren Masse wie einer phosphatgebundenen Einbettmasse vergossen; bei niedrigen Presstemperaturen ist auch eine Gipsverbindung geeignet

Nach Erhärten der Masse wird der Silikonring entfernt, und die Muffelbasis zusammen mit dem Muffeldorn herausgezogen. Hierbei trennt sich die per Rapid-Prototyping erstellte Anordnung von dem Muffeldorn und verbleibt in der Muffel.

Sie besteht aus einer rückstandsfrei entfernbaren Masse. Hierzu wird die Muffel auf eine geeignete Temperatur gebracht, bei welcher das Material der Positivmodelle schmilzt oder sogar verdampft, oder rückstandsfrei verbrennt.

Nach diesem Schritt verbleiben die Press-Hohlräume und der Presskanal an der Stelle, an der sich zuvor der Muffeldorn erstreckte. Zwischen diesen sind die erfindungsgemäß ausgebildeten Zubringerkanäle vorgesehen.

Die Muffel wird nun typischerweise umgedreht, nachdem die für die Dentaltechnik verwendeten Pressöfen einen Pressstempel aufweisen, der sich von oben nach unten bewegt. Nach Einbringen eines Mehrkeramikrohlings wird eine Distanzscheibe oder ein Distanzzylinder oder beides, z.B. aus Aluminiumoxid oder aus einer phosphatgebundenen Einbettmasse, eingeführt, und hieran anschließend die vorgewärmte Muffel in den Pressofen gebracht, wo sie auf die Presstemperatur gebracht wird.

Durch Erwärmung wird die Keramik nun zähflüssig und aufgrund des von dem Pressstempel ausgeübten Drucks fließt sie durch die Zubringerkanäle in die Presshohlräume.

Die hier zur Rede stehenden Temperaturen betragen zwischen 850° C bei Lithiumdisilikatkeramiken und 1200 °C bei z.B. Leuzitglaskeramiken oder Oxidkeramiken.

Bei einstückiger Fertigung der Anordnung aus Zubringerkanälen und Positivmodellen lässt sich der erfindungsgemäß gegebenenfalls erwünschte Höhenversatz sowohl ausgangsseitig aber bevorzugt eingangsseitig des Zubringerkanals realisieren und gegebenenfalls auch an beiden Seiten. Ferner bestehen große Freiräume in der Wahl der Form des Zubringerkanals.

Die besondere Aufgabe der CAM-Vorrichtung besteht erfindungsgemäß darin, die Form des Zubringerkanals dergestalt auszuwählen, dass ein ästhetisch besonders ansprechendes Ergebnis, aber auch ein den Belassungserfordernissen der Dentalrestaurationen entsprechendes Ergebnis bereitgestellt wird. Bei hinsichtlich des Materials unterschiedlichen Keramikarten trägt die CAM-Vorrichtung dafür Sorge, dass das als Verstärkungselement eingesetzte Material, wie beispielweise eine Oxidkeramik, in ausreichendem Maße der Dentalrestauration, also dem Press-Hohlraum für diese, zugeführt wird.

Hierzu ist der Strömungsquerschnitt des Zubringerkanals an der Stirnfläche des Presskanals oder diesem Bereich benachbart ausreichend breit. Typischerweise wird das dunklere und/oder härtere Keramikmaterial endseitig des Presskanals, also bei einer Muffelanordnung, bei der die Muffelbasis unten ist, oben zugeführt, wobei der Press-Hohlraum so ausgerichtet ist, dass der Inzisal- bzw. Okklusalbereich dann unten ist.

Diese Betrachtung wird hier allgemein zugrundegelegt, wobei es sich versteht, dass beim Pressen die Muffel um 180° gedreht wird; diese Position wird hier jedoch nicht weiter erläutert.

Der Pressrohling - und damit auch die fertige Dentalkeramik - weist dann unten die weichere und/oder hellere Keramik auf, und die vertikale Relativposition zwischen dem Zubringerkanal und dem Presshohlraum beeinflusst die Strömung in diesen, und damit die Verteilung der Keramikarten in der Dentalrestauration. Aufgrund der Reibungseffekte zwischen dem oberen und unteren Ende des Zubringerkanals wird der Keramikstrom dort je gebremst, so dass die Keramikströmungsfront typischerweise bauchig ist, also mittig vorgewölbt.

Um dieser Erscheinung zu begegnen, kann auch eine mittige Einschnürung des Zubringerkanals vorgesehen sein.

In weiterer vorteilhafter Ausgestaltung ist ein oder sind mehrere Entlastungsvorsprünge vorgesehen, die sich entlang der Längsseite des Zubringerkanals quer zur Strömungsrichtung erstrecken und in welche die Dentalkeramik vor dem Weiterströmen eintritt. Hierdurch lässt sich eine Strömungsvergleichmäßigung erzeugen.

In einer weiter bevorzugten Ausgestaltung ist es vorgesehen, den Zubringerkanal in Verlängerung der inzisalen bzw. okklusalen Schwerpunktserstreckung anzubringen. Bei Molaren bietet sich hierzu der mesiobukkale Höcker an, wobei sich der Zubringerkanal dann bevorzugt im Wesentlichen mesial von diesem ausgehend erstreckt, jedoch bevorzugt leicht schräg, gleichsam in Verlängerung der bukkalen Außenfläche der Dentalrestauration.

Bei Frontzähnen erfolgt in gleicher Weise die Ausrichtung des Zubringerkanals bevorzugt entlang der labialen Fläche, also in Verlängerung der Zahnschneide, jedoch gegenüber dieser leicht in lingualer Richtung abgewinkelt.

Diese Ausrichtung optimiert die Einströmung der Dentalkeramikfront in den Press-Hohlraum der Dentalkeramik.

In einer weiteren Ausführungsform kann es besonders bei Molaren vorteilhaft sein, den Zubringerkanal in gerader Verlängerung der Mittelfissur anzubringen um eine besonders symmetrische Verteilung der sich unterscheidenden Keramikarten zu gewährleisten.

Bei Bedarf können die Gradienten des Übergangs bzw. der Verteilung der Keramikarten auch durch Überströmräume verändert werden. Diese erstrecken sich bevorzugt an dem Muffeldorn, wobei sich der Eingriff auf alle Objekte der Pressmuffel auswirkt, oder aber auch am Zubringerkanal selbst. In letzterem Fall wirkt sich der Eingriff auf die einzelne Restauration aus.

Das Dentalmaterial strömt dann bei Pressbeginn unmittelbar dort in den Überströmraum hinein, und ist in der Restauration mit entsprechend geringerem Prozentanteil vorzufinden.

Besonders günstig ist es, wenn an dem Zubringerkanal, der aus Wachs bestehen kann, ein umlaufender Wulst angebracht wird, welcher mit dem Muffeldorn bündig abschließt, nachdem der Zubringer in die vorgesehene Nut am Muffeldorn eingebracht worden ist. Hierdurch wird das Anwachsen wesentlich erleichtert und eine mögliche Beschädigung des Zubringerprofils wirkungsvoll verhindert.

Weitere Vorteile, Einzelheiten und Merkmale ergeben sich aus der nachfolgenden Beschreibung mehrerer Ausführungsbeispiele der Erfindung anhand der Zeichnungen.

### Es zeigen:

- Fig. 1: eine schematische Ansicht eines Teils einer Dentalkeramik-Erzeugungsvorrichtung, unter Darstellung eines Muffeldorns, zweier Zubringerkanäle und zweier Formhohlräume für die Erstellung von Dentalkeramiken, in der Stirnansicht auf den Muffeldorn;
- Fig. 2: eine Seitenansicht der Ausführungsform gemäß Fig. 1;
- Fig. 3: eine modifizierte Ausführungsform, in der Ansicht gemäß Fig. 2;
- Fig. 4a-4e: Querschnittsansichten von Zubringerkanälen für die erfindungsgemäße Dentalkeramik-Erzeugungsvorrichtung; und
- Fig. 5: eine Seitenansicht einer weiteren per Rapid-Prototyping erzeugten Form für einen Presskanal, einen Zubringerkanal und einen Press-Hohlraum.
- Fig. 6: Ein Draufsicht auf einen Zubringerkanal aus Wachs mit umlaufender Wulst als Anwachshilfe
- Fig. 7: Ein Draufsicht auf einen Zubringerkanal aus Polymermaterial mit Sollbruchstelle

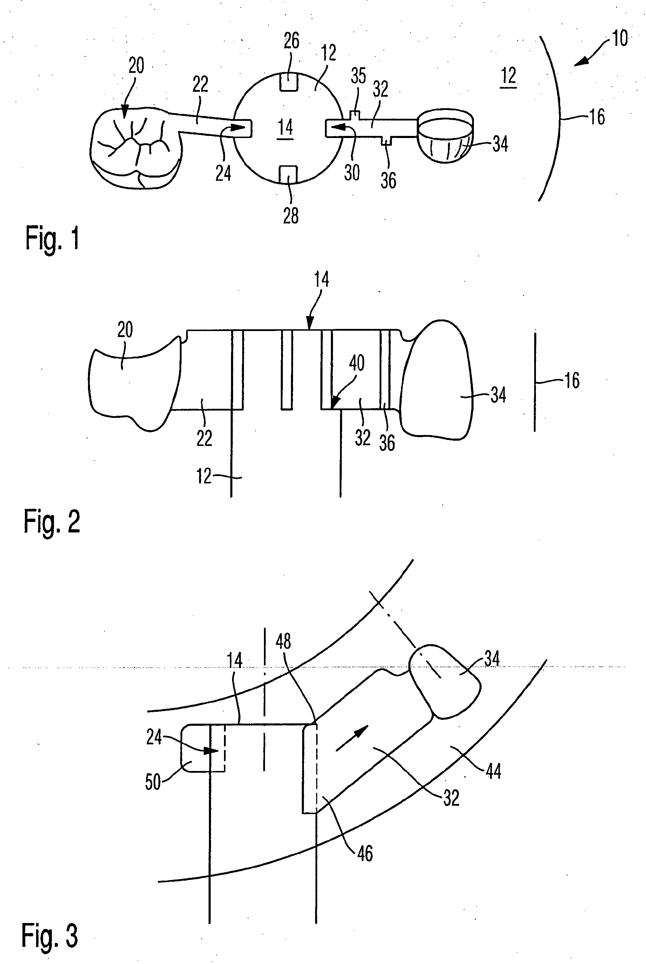

Die in Fig. 1 nur in einem ganz geringen Teil dargestellte Dentalkeramik-Erzeugungsvorrichtung 10 verwendet - wie bereits oben dargestellt - eine CAD/CAM-Vorrichtung für die Bereitstellung eines einzubettenden Positivmodells. Dieses ist in Fig. 1 dargestellt. Ein Muffeldorn 12 erstreckt sich von einer unter der Zeichnungsebene liegenden Muffelbasis und endet an einer Stirnfläche 14. Die Muffelbasis bildet zugleich die Unterseite einer Muffel, deren Muffelrand 16 in Fig. 1 ebenfalls schematisch ersichtlich ist.

In der Ausführungsform gemäß Fig. 1 werden per CAD/CAM, nämlich mit einem hierfür geeigneten Rapid-Prototyping-Verfahren, Zubringerkanäle und Press-Hohlräume als Positivmodelle erzeugt. Hierzu gehört ein Positivmodell 20 eines Molaren, dessen Zervikalseite der Stirnfläche 18 benachbart angeordnet ist, etwa auf deren Ebene. Das Positivmodell 20 bildet nach Abbinden der Muffel und Ausbrennen des aus Polyacryl bestehenden Rapid-Prototyping-Materials den entsprechenden Presshohlraum für die Dentalkeramik.

Es wird einstückig mit dem zugehörigen Zubringerkanal 22 erzeugt, der in besonderer Weise ausgebildet ist. Er ist in einer Nut 24 des Muffeldorns 12 aufgenommen und wird durch den Rapid-Prototyping-Formungsschritt in einer aus Fig. 2 besser ersichtlichen Höhenlage erzeugt, die der erwünschten Verteilung der Keramikarten entspricht. Hierzu wird beim späteren Pressvorgang ein Keramikrohling verwendet, der aus mehreren Keramikarten mit einem entsprechenden Übergang besteht, beispielsweise aus zwei unterschiedlichen Keramikmaterialien oder Keramiken mit unterschiedlicher Farbe. Beispielhaft sei hier die unterschiedliche Farbverteilung angesprochen.

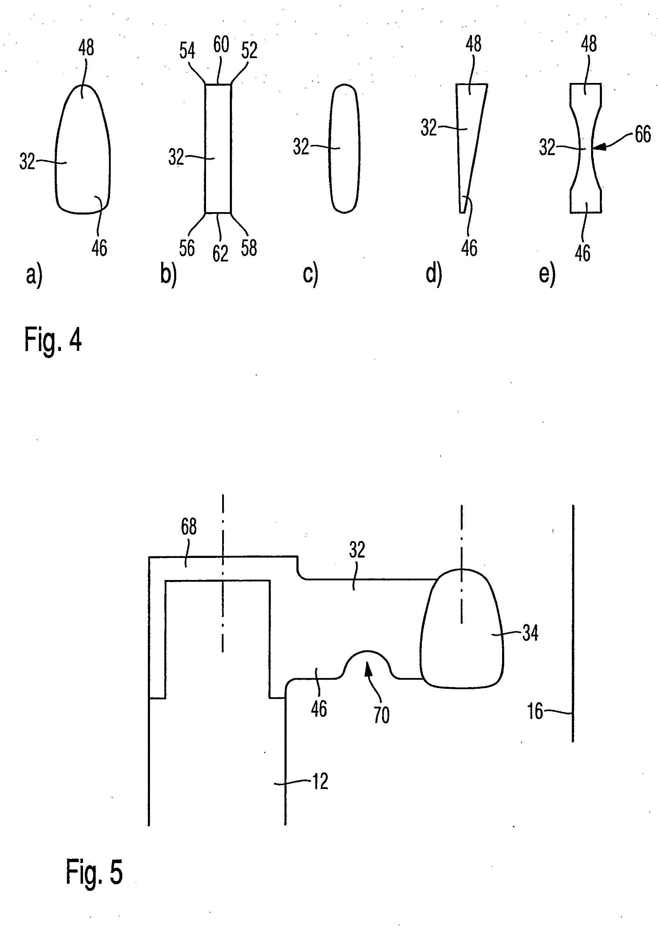

Die aus Fig. 2 ersichtliche Höhenlage, die von der CAM-Vorrichtung nach Benutzerwahl vorgegeben wird, beeinflusst die Farbverteilung, insbesondere nämlich die Endwerte. Zudem kann durch eine entsprechende Gestaltung des Zubringerkanals 22 auf den Übergang Einfluss genommen werden, wozu beispielhaft auf die Fig. 4a bis 4e Bezug genommen wird. Der Muffeldorn 12 weist neben der Nut 24 drei weitere Nuten 26 bis 30 auf. Diese sind für die Aufnahme weiterer Zubringerkanäle bestimmt, wobei im Beispielsfall die Nut 30 mit dem Zubringerkanal 32 bestückt ist. Mit dem Zubringerkanal 32 einstückig verbunden ist ein Positivmodell 34 zur Ausbildung eines Formhohlraums für einen Frontzahn. Frontzähne sind typischerweise ästhetisch wichtiger hinsichtlich des genauen Farbaufbaus, sowohl was die Transluzenz als auch die Anpassung an die Nachbarzähne angeht.

Der Zubringerkanal 32 weist Entlastungsvorsprünge 35 und 36 auf, die der Strömungsvergleichmäßigung dienen. Sie können auch von der CAM-Vorrichtung größer gewählt werden, um das Volumen des Positivmodells 34 mit dem Zubringerkanal 32 an das Volumen des Positivmodells 20 mit dem Zubringerkanal 22 anzugleichen und so eine gleichzeitige Fertigstellung zu gewährleisten.

Es ist bevorzugt, dass die Strömungsfront der erweichten Dentalkeramik die Press-Hohlräume gleichzeitig füllt.

Aus Fig. 2 ist ersichtlich, dass die Okklusal- bzw. Inzisalseiten der Zähne sich nach unten erstrecken, also die im Beispielsfall helleren Keramikarten des Rohlings ebenfalls nach unten ausgerichtet sein müssen.

Durch vertikales Verschieben per Rapid-Prototyping lässt sich die Farbigkeit bzw. Helligkeit der Dentalrestaurationen beeinflussen; im Beispielsfall ist es vorgesehen, dass die Zubringerkanäle 22 und 32 über Anschläge 40 an einer vertikal vorgegebenen Position an dem Muffeldorn 12 in den Nuten 24 bzw. 30 sitzen, während es in einer modifizierten Ausgestaltung vorgesehen ist, auch die Relativposition zwischen dem Zubringerkanal 22 bzw. 32 und dem Muffeldorn 12 zu variieren.

Es ist ersichtlich, dass der Abstand zwischen dem Press-Hohlraum 34 und dem Muffelrand 16 vorgegeben ist; bevorzugt beträgt dieser Abstand mindestens 10mm, auch wenn hier aus zeichnerischen Gründen ein kleinerer Abstand dargestellt ist.

Moderne Pressöfen für das Pressen von Dentalkeramiken weisen heutzutage typischerweise eine sogenannte Bodenheizung auf. Diese Heizung heizt den Bereich unterhalb der Muffel und ergänzt eine Ringheizung, die die Muffel ringförmig umgibt und in erster Linie für die Erwärmung des Ofeninnenraums sorgt.

Vielfach werden jedoch Pressöfen verwendet, die ohne Bodenheizung auskommen. In diesem Fall ist die Ringheizung die einzige Heizung. Dies führt dazu, dass die Muffel von außen nach innen erwärmt wird. Hierdurch entstehen kegelförmige isothermische Korridore, wie sie beispielhaft anhand des Korridors 44 in Fig. 3 dargestellt sind.

Aufgrund der Flexibilität des Rapid-Prototypings kann für einen derartigen Ofen bei der Ausgestaltung des Zubringerkanals 32 eine Optimierung dergestalt vorgenommen werden, dass sich sowohl das Positivmodell 34 als auch der Zubringerkanal 32 in einem isothermen Korridor 44 erstreckt. Nachdem bei dieser Lösung der Strömungsweg im unteren Bereich 46 des Zubringerkanals 32 länger ist als im oberen Bereich 48, erfolgt erfindungsgemäß besonders bevorzugt eine Kompensation durch eine entsprechende Form des Zubringerkanals, beispielsweise die Form gemäß Fig. 4a. Der Strömungswiderstand ist dann im Bereich 46 geringer als im Bereich 48, so dass die Verlängerung des Strömungswegs insofern kompensiert wird.

In dem dargestellten Ausführungsbeispiel gemäß Fig. 3 ist zudem im oberen Bereich, also der Stirnfläche 14 benachbart, in der Nut 24 ein Überströmraum 50 ausgebildet, der ebenfalls die Neigung des erweichenden Dentalkeramikmaterials, den Bereich 48 schnell zu durchdringen, kompensiert.

Aus Fig. 4a bis 4e sind verschiedene Zubringerkanal-Formen im Querschnitt ersichtlich. Beispielsweise kann der Zubringerkanal 32 gemäß Fig. 4a im Bereich 48 schmaler und im Bereich 46 breiter sein. Gemäß Fig. 4a weist der Zubringerkanal 32 allseitig abgerundete Ecken auf, so dass die Strömungswiderstände dort vergleichsweise gering sind.

Gemäß Fig. 4b ist ein rechteckiger Strömungsquerschnitt des Strömungskanals 32 gewählt. Dort entstehen die Hauptbremswirkungen entlang der Ecken 52, 54, 56 und 58, aber auch entlang der Oberseite 60 und entlang der Unterseite 62. Bei dieser Form ist die Strömungsfront mittig vorgewölbt und bleibt in den Ecken 52 bis 58 deutlich zurück. Eine derartige Ausgestaltung führt dazu, dass sich der Mittenbereich die Dentalkeramik zunächst füllt zunächst der Mittenbereich mit Dentalkeramik füllt, so dass insofern eine Farbspreizung entsteht.

Bei dem Querschnittsprofil gemäß des Zubringerkanals gemäß Fig. 4c sind die Randeffekte demgegenüber geringer, so dass eine geringere Farbspreizung auftritt.

Bei dem keilförmigen Strömungsquerschnitt gemäß Fig. 4d entsteht eine Betonung des dunkleren oberen Bereichs 48 und dementsprechend eine Farbverschiebung zu diesem hin, nachdem der Strömungswiderstand im Bereich 46 deutlich höher ist.

Die eingeschnürte Form gemäß Fig. 4e kompensiert die anhand der Fig. 4b beschriebene Farbspreizung, da dort der Strömungswiderstand im Mittenbereich 66 bewusst größer gehalten ist.

Diese Formen lassen sich in beliebiger Weise per Rapid-Prototyping einstückig mit dem Positivmodell 32 erzeugen.

Gemäß Fig. 5 ist es vorgesehen, Zubringerkanäle, von denen ein Zubringerkanal 32 dargestellt ist, und Positivmodelle, von denen ein Positivmodell 34 dargestellt ist, einstückig zu erzeugen. Hierzu ist eine Zubringerkanalbasis 68 vorgesehen, die sich kappenförmig über den Muffeldorn 12 erstreckt. In diesem Ausführungsbeispiel lässt sich der Muffeldorn 12 besonders leicht aus der erhärteten Muffel lösen.

Der Zubringerkanal 32 weist in diesem Ausführungsbeispiel zudem eine Einschnürung 70 im inzisalen Bereich 46 auf, die dazu führt, dass die Farbverteilung sich zu dunkleren Farben hin verlagert.

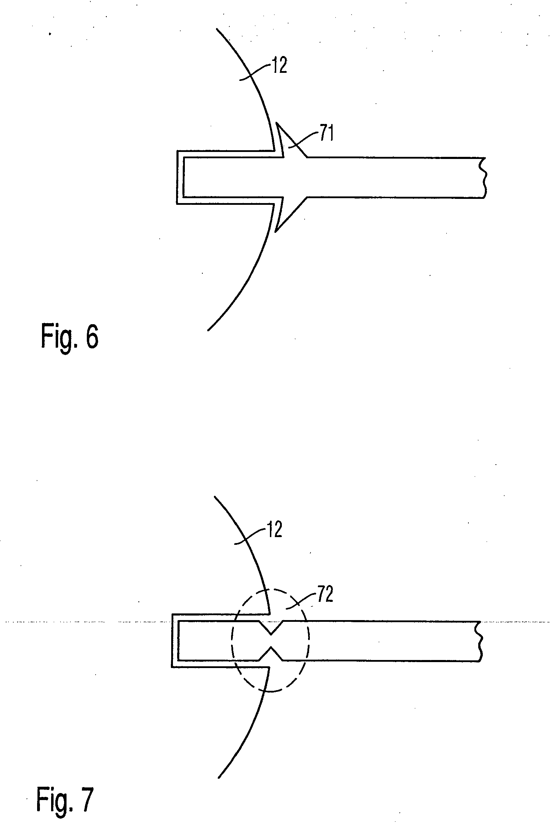

Gemäss Fig. 6 ist ein Zubringerkanal in Wachs fabriziert. Hierbei ist es vorteilhaft, wenn ein umlaufender Wulst 71 angebracht wird, welcher mit dem Muffeldorn 12 bündig abschließt, nachdem der Zubringer in die vorgesehene Nut 24 am Muffeldorn eingebracht wurde. Hierdurch wird das Anwachsen wesentlich erleichtert. Eine mögliche Beschädigung des Zubringerprofils kann wirkungsvoll verhindert werden.

Gemäss Fig. 7 ist der Zubringerkanal ist aus einem Polymermaterial, z.B. Polyacryl. Hierbei ist es günstig, an der Übergangsstelle von der Befestigungsnut 24 zum freien Zubringerkanal eine Sollbruchstelle 72 anzubringen, damit nach der Aushärtung der Einbettmasse die Muffelbasis mit dem Muffeldorn mittels einer Drehbewegung leicht gelöst werden kann.

## Patentansprüche

1. Dentalkeramik-Erzeugungsvorrichtung umfassend eine CAD-/CAM-Vorrichtung für die Bereitstellung eines Press-Hohlraums für die Erzeugung der Dentalkeramik, wobei durch eine CAD-Vorrichtung dieser basierend auf Scandaten die Form der zu erzeugenden Dentalkeramik festlegbar ist, und wobei durch eine CAM-Vorrichtung dieser ein Positivmodell erzeugbar ist, basierend auf welchem der Form-Hohlraum über eine verlorene Form erzeugbar ist, **dadurch gekennzeichnet, dass** durch die CAM-Vorrichtung auch die Verteilung und der Übergang zwischen unterschiedlichen Keramikarten, also Arten von Keramiken, die sich mindestens hinsichtlich eines Parameters im Material, Aussehen, Festigkeit oder dergleichen unterscheiden, automatisch festlegbar sind, wobei durch die CAM-Vorrichtung zur Einstellung der Verteilung und des Übergangs die Lage, die Abmessungen und die relative Höhe eines Zubringerkanals (22, 32) zwischen einem Muffeldorn (12), der dem Presskanal entspricht, und dem Press-Hohlraum (34), bezogen auf den Press-Hohlraum (34) und den Muffeldorn (12), für die Erzeugung der Dentalkeramik in Abhängigkeit von mindestens einem dieser Parameter festlegbar und automatisch einstellbar sind.

2. Dentalkeramik-Erzeugungsvorrichtung nach Anspruch 1, **dadurch gekennzeichnet, dass** durch die CAM-Vorrichtung der Zubringerkanal (22, 32) in Form eines Plättchens mit einer Länge von mindestens 3 mm erzeugbar ist, der sich von dem Muffeldorn (12), welcher beim Pressen als Presskanal verwendbar ist, quer ab zu dem Press-Hohlraum (34) für die Dentalkeramik erstreckt.

3. Dentalkeramik-Erzeugungsvorrichtung nach einem der vorhergehenden Ansprüche, **dadurch gekennzeichnet, dass** durch die CAM-Vorrichtung der Anstellwinkel und/oder die Höhenlage zwischen dem Press-Hohlraum (34) für die Dentalkeramik und dem Zubringerkanal (22, 32) festlegbar ist bzw. sind, insbesondere sowohl in vertikaler als auch in horizontaler Richtung.

4. Dentalkeramik-Erzeugungsvorrichtung nach einem der vorhergehenden Ansprüche, **dadurch**
**gekennzeichnet, dass** durch die CAM-Vorrichtung sowohl der Press-Hohlraum (34) als auch der Zubringerkanal (22, 32), insbesondere einstückig und generativ erzeugbar sind, besonders bevorzugt aus Wachs oder aus einem Kunststoff wie Polyacryl per Rapid-Prototyping.

5. Dentalkeramik-Erzeugungsvorrichtung nach einem der vorhergehenden Ansprüche, **dadurch gekennzeichnet, dass** durch die Erzeugungsvorrichtung (10) der Press-Hohlraum (34) bezogen auf den Zubringerkanal (22, 32) in ihrer vertikalen Relativposition festlegbar ist, insbesondere bezogen auf die vertikale Mitte des Zubringerkanals (22, 32).

6. Dentalkeramik-Erzeugungsvorrichtung nach einem der vorhergehenden Ansprüche, **dadurch gekennzeichnet, dass** durch die CAM-Vorrichtung die Ausrichtung des Press-Hohlraums (34) so wählbar ist, dass die Inzisal-/Okklusalseite der Dentalkeramik des Press-Hohlraums (34) zur Muffelbasis und die Basalseite in Richtung des Endes des Muffeldorns (12) weist.

7. Dentalkeramik-Erzeugungsvorrichtung nach einem der vorhergehenden Ansprüche, **dadurch gekennzeichnet, dass** durch die CAM-Vorrichtung ein virtueller Raum definierbar ist, innerhalb welcher der Press-Hohlraum (34) und der Zubringerkanal (22, 32) sich innerhalb der Muffel erstrecken darf und diesen virtuellen Ringraum innerhalb der Muffel ggf. bei möglichem Benutzereingriff hinsichtlich der Lage des Press-Hohlraums (34) für die Dentalkeramik visuell markiert.

8. Dentalkeramik-Erzeugungsvorrichtung nach einem der vorhergehenden Ansprüche, **dadurch gekennzeichnet, dass** durch die CAM-Vorrichtung die Längsachsen des Press-Hohlraums (34) für die Erzeugung der Dentalkeramik und des plattenförmigen Zubringerkanals (22, 32) parallel zueinander ausrichtbar sind.

9. Dentalkeramik-Erzeugungsvorrichtung nach einem der vorhergehenden Ansprüche, **dadurch gekennzeichnet, dass** die vestibulären (labialen bzw. bukkalen) Seiten von Zubringerkanal (22, 32) und Press-Hohlraum (34) im Wesentlichen bündig zueinander ausgerichtet sind und dass die Horizontalachse des Zubringerkanals (22, 32) den Press-Hohlraum (34) durchtritt, jedoch gegenüber dessen Längsachse in vestibulärer Richtung ausgelenkt ist.

10. Dentalkeramik-Erzeugungsvorrichtung nach einem der vorhergehenden Ansprüche, **dadurch gekennzeichnet, dass** durch die CAM-Vorrichtung der Verbindungspunkt zwischen dem Zubringerkanal (22, 32) und dem Press-Hohlraum (34) für die Erzeugung der Dentalkeramik an einen proximalen Umfangsbereich des Press-Hohlraums (34) wählbar ist.

11. Dentalkeramik-Erzeugungsvorrichtung nach einem der vorhergehenden Ansprüche, **dadurch gekennzeichnet, dass** durch die CAM-Vorrichtung die Stärke des Zubringerkanals (22, 32) in Abhängigkeit von dem rechnerisch ermittelten Volumen des Press-Hohlraums (34) festlegbar und bei Volumina unterhalb eines vorgegebenen Schwellenwerts an den Zubringerkanälen (22, 32) und/oder an dem dem Muffeldorn (12) entsprechenden Presskanal Druckminderräume ausbildbar sind, die beim Pressen die vordringende und unter isostatischem Druck stehende Keramik entspannen.

12. Dentalkeramik-Erzeugungsvorrichtung nach einem der vorhergehenden Ansprüche, **dadurch gekennzeichnet, dass** der Press-Hohlraum (34) einen Dorn für die Ausbildung eines Stumpfes für die Dentalkeramik aufweist und dass die Längsachse des Zubringerkanals (22, 32) bezogen auf den Press-Hohlraum (34) so ausgerichtet ist, dass sie den Press-Hohlraum (34) außerhalb des Dorns schneidet und/oder dass die Längsachse des Zubringerkanals asymmetrisch zur Achse des Dorns ausgebildet ist.

13. Dentalkeramik-Erzeugungsvorrichtung nach einem der vorhergehenden Ansprüche, **dadurch gekennzeichnet, dass** die Höhe eines Zubringerkanals (22, 32) der Höhe eines Presslings entspricht, der in der Muffel für die Ausgestaltung einer insbesondere mehrfarbigen Dentalkeramik aufgenommen ist, oder höchstens um 20 % geringer als die Höhe des Rohlings ist.

14. Dentalkeramik-Erzeugungsvorrichtung nach einem der vorhergehenden Ansprüche, **dadurch gekennzeichnet, dass** der Muffeldorn (12) für die Aufnahme von plattenförmigen Zubringerkanälen (22, 32) vorgesehen ist, der insbesondere mindestens zwei, bevorzugt vier Schlitze für die Aufnahme dieser aufweist, deren Vertikalerstreckung einen Anschlag für die vertikale Ausrichtung der Zubringerkanäle (22, 32) bildet.

15. Dentalkeramik-Erzeugungsvorrichtung nach Anspruch 14, **dadurch gekennzeichnet, dass** der Muffeldorn (12) für die Aufnahme und Lagerung der Zubringerkanäle (22, 32) für die Press-Hohlräume (34) für die Erzeugung der Dentalrestauration vorgesehen ist, und dass die Zubringerkanäle (22, 32) über eine gemeinsame Haube miteinander verbunden sind, die für die Aufnahme an dem Muffeldorn (12) bestimmt ist.

16. Dentalkeramik-Erzeugungsvorrichtung nach einem der vorhergehenden Ansprüche, **dadurch gekennzeichnet, dass** durch die CAM-Vorrichtung Viskositätsunterschiede zwischen den Keramikarten durch Druckminderräume und/oder Strömungshindernisse mindestens teilweise ausgleichbar sind, welche Druckminderräume und/oder Strömungshindernisse am Presskanal, an einem der Zubringerkanäle (22, 32) oder beiden oder an allen angeordnet sind.

17. Dentalkeramik-Erzeugungsvorrichtung nach einem der vorhergehenden Ansprüche, **dadurch gekennzeichnet, dass** die CAM-Vorrichtung einen Zubringerkanal-Bibliothek aufweist, über welche - gegebenenfalls unter Benutzereingriff - die Verteilung und der Übergang zwischen den unterschiedlichen Keramikarten in der Dentalkeramik basierend auf vorgegebenen Verteilungsmustern oder Übergangsmustern festlegbar ist.

18. Dentalkeramik-Erzeugungsvorrichtung nach einem der vorhergehenden Ansprüche, **dadurch gekennzeichnet, dass** an dem Zubringerkanal (32) ein umlaufender Wulst (71) angebracht ist, welcher mit dem Muffeldorn (12) insbesondere bündig abschließt, nachdem der Zubringerkanal (32) in die vorgesehene Nut (30) am Muffeldorn (12) eingebracht ist.

19. Dentalkeramik-Erzeugungsvorrichtung nach einem der vorhergehenden Ansprüche, **dadurch gekennzeichnet, dass** der Zubringerkanal (22) aus einem Polymermaterial, z.B. Polyacryl, ist, und insbesondere an der Übergangsstelle von der Befestigungsnut (24) zum freien Zubringerkanal (22) eine Sollbruchstelle (72) aufweist.

## Claims

1. A device for producing dental ceramic comprising a CAD/CAM device for providing a pressing cavity for producing the dental ceramic, wherein the shape of the dental ceramic to be produced is determinable by a CAD device thereof, based on scan data, and wherein a positive model can be produced by a CAM device thereof, based on which the mold cavity can be produced using a lost mold, **characterized in that**, by means of the CAM device, distribution and transition between different types of ceramics, i.e. types of ceramics, which differ at least with respect to one parameter concerning the material, appearance, strength or the like, is automatically adjustable, wherein, using the CAM device for adjusting the distribution and the transition, the position, the dimensions and the relative height of a feeder channel (22, 32) between a muffle mandrel (12), which corresponds to the press channel, and the pressing cavity (34), are determinable and are automatically adjustable with respect to the pressing cavity (34) and the muffle mandrel (12), for the production of the dental ceramic, depending on at least one of these parameters.

2. The dental ceramic production device according to claim 1, **characterized in that**, using the CAM device the feeder channel (22, 32) can be produces in the form of a platelet having a length of at least 3 mm, which feeder channel transversely extends from the muffle mandrel (12), which can be used as a press channel during pressing, to the pressing cavity (34) for the dental ceramic.

3. The device for producing dental ceramic according to one of the preceding claims, **characterized in that**, using the CAM device, the angle of incidence and/or the height position between the pressing cavity (34) for the dental ceramic and the feeder channel (22, 32), in particular both in vertical and horizontal direction, are or is determinable, respectively.

4. The device for producing dental ceramic according to one of the preceding claims, **characterized in that**, using the CAM device, both the pressing cavity (34) and the feeder channel (22, 32) can be produced, in particular in one piece and generatively, particularly preferably from wax or from plastics such as polyacrylics by rapid prototyping.

5. The device for producing dental ceramic according to one of the preceding claims, **characterized in that**, using the production device (10), the pressing cavity (34) is adjustable with respect to the feeder channel (22, 32), in the vertical relative position thereof in particular with respect to the vertical center of the feeder channel (22, 32).

6. The device for producing dental ceramic according to one of the preceding claims, **characterized in that**, using the CAM device, orientation of the pressing cavity (34) to be selected is selectable such that the incisal/occlusal side of the dental ceramic of the pressing cavity (34) is positioned facing to the muffle base, and the basal side is positioned facing the muffle mandrel (12).

7. The device for producing dental ceramic according to one of the preceding claims, **characterized in that** a virtual space can be defined using the CAM device, within which the pressing cavity (34) and the feeder channel (22, 32) may extend within the muffle, and visually marks this virtual annular space within the muffle, if necessary during possible user intervention, with respect to the position of the pressing cavity (34) for the dental ceramic.

8. The device for producing dental ceramic according to one of the preceding claims, **characterized in that**, using the CAM device, the longitudinal axes of the pressing cavity (34) for the production of the dental ceramic and the plate-shaped feeder channel (22, 32) can be aligned parallel to each other.

9. The device for producing dental ceramic according to one of the preceding claims, **characterized in that** the vestibular (labial or buccal) sides of the feed channel (22, 32) and the pressing cavity (34) are aligned substantially flush to each other, and **in that** the horizontal axis of the feed channel (22, 32) passes through the pressing cavity (34), but is deflected relative to its longitudinal axis in the vestibular direction.

10. The device for producing dental ceramic according to one of the preceding claims, **characterized in that**, using the CAM device, the connection point between the feeder channel (22, 32) and the pressing cavity (34) is selectable for the production of the dental ceramic in a proximal peripheral region of the pressing cavity (34).

11. The dental ceramic production device according to one of the preceding claims, **characterized in that** the CAM device is capable of determining the thickness of the feeder channel (22, 32) as a function of the mathematically determined volume of the pressing cavity (34) and, in the case of volumes being below a predetermined threshold value, pressure-reducing spaces may be formed at the feeder channels (22, 32) and/or at the press channel corresponding to the muffle mandrel (12), which spaces relieve the advancing ceramic under isostatic pressure during pressing.

12. The device for producing dental ceramic according to one of the preceding claims, **characterized in that** the pressing cavity (34) comprises a mandrel for forming a stub for the dental ceramic and **in that** the longitudinal axis of the feeder channel (22, 32) is oriented with respect to the pressing cavity (34) such that it intersects the pressing cavity (34) outside the mandrel and/or **in that** the longitudinal axis of the feeder channel is formed asymmetrically to the axis of the mandrel.

13. The device for producing dental ceramic according to one of the preceding claims, **characterized in that** the height of a feeder channel (22, 32) corresponds to the height of a pressed blank received in the muffle for designing an especially multicolored dental ceramic, or is at most by 20% less than the height of the blank.

14. The device for producing dental ceramic according to one of the preceding claims, **characterized in that** the muffle mandrel (12) is provided for receiving plate-shaped feeder channels (22, 32), which mandrel (12) especially comprises at least two, preferably four slots for receiving them, the vertical extension of which forms a stop for the vertical alignment of the feeder channels (22; 32).

15. The dental ceramic production device according to claim 14, **characterized in that** the muffle mandrel (12) is provided for receiving and supporting the feeder channels (22, 32) for the press cavities (34) for the production of the dental restoration, and **in that** the feeder channels (22, 32) are connected to each another by a common hood which is intended to be received on the muffle mandrel (12).

16. The device for producing dental ceramic according to one of the preceding claims, **characterized in that** viscosity differences between the ceramic types may be at least partially compensated by the CAM device using pressure-reducing spaces and/or flow obstacles, which pressure-reducing spaces and/or flow obstacles are arranged in the press channel on one of the feeder channels (22, 32) or on both of the feeder channels or are arranged on all feeder channels.

17. The device for producing dental ceramic according to one of the preceding claims, **characterized in that** the CAM device comprises a feeder channel library, which - optionally with user intervention - allows distribution and transition between the different types of ceramics in dental ceramics based on predetermined distribution and transition patterns between the different types of ceramics in the dental ceramic.

18. The device for producing dental ceramic according to one of the preceding claims, **characterized in that** a circumferential bead (71) is attached to the feeder channel (32), which bead (71) especially is flush with the muffle mandrel (12) after the feeder channel (32) has been inserted into the provided groove (30) on the muffle mandrel (12).

19. The device for producing dental ceramic according to one of the preceding claims, **characterized in that** the feeder channel (22) is made of a polymer material, e.g. polyacrylics, and has a predetermined breaking point (72), in particular at the transition point from the fastening groove (24) to the free feeder channel (22).

## Revendications

1. Dispositif de fabrication de céramique dentaire comprenant un dispositif CAO/FAO pour la réalisation d'une cavité de pressage pour la fabrication de la céramique dentaire, où, au moyen d'un dispositif CAO de celle-ci, la forme de la céramique dentaire à fabriquer peut être déterminée sur la base de données de balayage, et où, au moyen d'un dispositif FAO de celle-ci, un modèle positif peut être fabriqué, sur la base duquel la cavité formée peut être réalisée par l'intermédiaire d'une forme perdue, **caractérisé en ce que**, au moyen du dispositif FAO, la répartition et la transition entre les différents types de céramique sont également déterminées, c'est-à-dire les types de céramique, qui diffèrent au moins par rapport à un paramètre de matériau, d'aspect, de rigidité ou similaire, peuvent être déterminées automatiquement, où à travers le dispositif FAO pour le réglage de la répartition et de la transition la position, les dimensions et la hauteur relative d'un canal d'alimentation (22, 32) entre un mandrin de moufle (12), qui correspond au canal de pressage, et la cavité de pressage (34), par rapport à la cavité de pressage (34) et au mandrin de moufle (12), peuvent être déterminées et réglées automatiquement pour la fabrication de la céramique dentaire en fonction d'au moins un de ces paramètres.

2. Dispositif de production de céramique dentaire selon la revendication 1, **caractérisé en ce que** le canal d'alimentation (22, 32) sous la forme d'une petite plaque d'une longueur d'au moins 3 mm peut être produit par le dispositif FAO, qui s'étend depuis le mandrin de moufle (12), qui peut être utilisé comme canal de pressage lors du pressage, transversalement à la cavité de pressage (34) pour la céramique dentaire.

3. Dispositif de production de céramique dentaire, selon l'une des revendications précédentes, **caractérisé en ce que** l'angle d'attaque et/ou la position en hauteur entre la cavité de pressage (34) pour la céramique dentaire et le canai d'alimentation (22, 32) peut ou peuvent être déterminé (s) par le dispositif FAO, en particulier à la fois en direction verticale et horizontale.

4. Dispositif de production de céramique dentaire selon l'une des revendications précédentes, **caractérisé en ce que** tant la cavité de pressage (34) que le canal d'alimentation (22, 32), peuvent être fabriqués par le dispositif FAO, en particulier en une seule pièce et de manière générative, de préférence en cire ou en une matière plastique telle que le polyacrylique par prototypage rapide.

5. Dispositif de production de céramique dentaire selon l'une des revendications précédentes, **caractérisé en ce que** la cavité de pressage (34) peut être fixée dans sa position relative verticale par rapport au canal d'alimentation (22, 32) par le dispositif de production (10), en particulier par rapport au centre vertical du canal d'alimentation (22, 32).

6. Dispositif de production de céramique dentaire selon l'une des revendications précédentes, **caractérisé en ce que** l'orientation de la cavité de pressage (34) peut être choisie par le dispositif FAO de manière à orienter le côté incisif/occlusal de la céramique dentaire de la cavité de pressage (34) vers la base du moufle et le côté basal vers l'extrémité du mandrin du moufle (12).

7. Dispositif de production de céramique dentaire selon l'une des revendications précédentes, **caractérisé en ce qu'**un espace virtuel peut être défini par le dispositif FAO, à l'intérieur duquel la cavité de pressage (34) et le canal d'alimentation (22, 32) peuvent s'étendre à l'intérieur du moufle et marque visuellement cet espace annulaire virtuel à l'intérieur du moufle, éventuellement avec l'intervention possible de l'utilisateur par rapport à la position de la cavité de pressage (34) pour la céramique dentaire.

8. Dispositif de production de céramique dentaire selon l'une des revendications précédentes, **caractérisé en ce que** les axes longitudinaux de la cavité de pressage (34) pour la production de la céramique dentaire et du canal d'alimentation en forme de plaque (22, 32) peuvent être alignés parallèlement l'un à l'autre par le dispositif FAO.

9. Dispositif de production de céramique dentaire selon l'une des revendications précédentes, **caractérisé en ce que** les côtés vestibulaires (labiaux ou buccaux) du canal d'alimentation (22, 32) et de la cavité de pressage (34) sont alignés essentiellement à fleur l'un de l'autre et que l'axe horizontal du canal d'alimentation (22, 32) passe par la cavité de pressage (34) mais est dévié dans la direction vestibulaire par rapport à son axe longitudinal.

10. Dispositif de production de céramique dentaire selon l'une des revendications précédentes, **caractérisé en ce que** le point de connexion entre le canal d'alimentation (22, 32) et la cavité de pressage (34) pour produire la céramique dentaire au niveau d'une partie périphérique proximale de la cavité de pressage (34) peut être sélectionné par le dispositif FAO.

11. Dispositif de fabrication de céramique dentaire selon l'une des revendications précédentes, **caractérisé en ce que** la résistance du canal d'alimentation (22, 32) en fonction du volume mathématiquement déterminé de la cavité de pressage (34) peut être déterminé par le dispositif FAO et, au cas où les volumes sont inférieurs à une valeur seuil prédéterminée, des espaces de réduction de pression peuvent être formés au niveau des canaux d'alimentation (22, 32) et/ou au niveau du canal de pressage correspondant au mandrin de moufle (12), qui pendant le pressage déchargent la pression sur la céramique qui avance sous pression isostatique.

12. Dispositif de fabrication de céramique dentaire selon l'une des revendications précédentes, **caractérisé en ce que** la cavité de pressage (34) présente un mandrin pour former un moignon pour la céramique dentaire et **en ce que** l'axe longitudinal du canal d'alimentation (22, 32) est orienté par rapport à la cavité de pressage (34) de manière à couper la cavité de pressage (34) à l'extérieur du mandrin et/ou que l'axe longitudinal du canal d'alimentation est conçu de manière asymétrique par rapport à l'axe du mandrin.

13. Dispositif de production de céramique dentaire selon l'une des revendications précédentes, **caractérisé en ce que** la hauteur d'un canal d'alimentation (22, 32) correspond à la hauteur d'une pièce pressée, qui est reçue dans le moufle pour la conception d'une céramique dentaire, en particulier multicolore, ou dont la hauteur est au maximum 20% inférieure à celle du mandrin.

14. Dispositif de fabrication de céramique dentaire selon l'une des revendications précédentes, **caractérisé en ce que** le mandrin de moufle (12) est prévu pour recevoir des canaux d'alimentation (22, 32) en forme de plaque, qui présente en particulier au moins deux, de préférence quatre fentes pour recevoir ces derniers, dont l'extension verticale forme une butée pour l'alignement vertical des canaux d'alimentation (22, 32).

15. Dispositif de fabrication de céramique dentaire selon la revendication 14, **caractérisé en ce que** le mandrin de moufle (12) est prévu pour recevoir et supporter les canaux d'alimentation (22, 32) pour les cavités de pressage (34) pour la fabrication de la restauration dentaire, et **en ce que** les canaux d'alimentation (22, 32) sont reliés entre eux par un capot commun qui est destiné à être logé sur le mandrin de moufle (12).

16. Dispositif de production de céramique dentaire selon l'une des revendications précédentes, **caractérisé en ce que** les différences de viscosité entre les types de céramique peuvent être compensées au moins partiellement par le dispositif FAO au moyen d'espaces de réduction de pression et/ou d'obstacles à l'écoulement, lesquels espaces de réduction de pression et/ou obstacles à l'écoulement sont disposés au niveau du canal de presse, de l'un des canaux d'alimentation (22, 32) ou des deux ou du tout.

17. Dispositif de production de céramique dentaire selon l'une des revendications précédentes, **caractérisé en ce que** le dispositif FAO comporte une bibliothèque de canaux d'alimentation, par laquelle, éventuellement avec l'intervention de l'utilisateur, la répartition et la transition entre les différents types de céramique dans la céramique dentaire peuvent être déterminées sur la base de modèles de répartition ou de transition prédéterminés.

18. Dispositif de production de céramique dentaire selon l'une des revendications précédentes, **caractérisé en ce qu'**un bourrelet périphérique (71) est fixé au canal d'alimentation (32), qui est en particulier à fleur du mandrin de moufle (12) après l'insertion du canal d'alimentation (32) dans la rainure (30) prévue sur le mandrin de moufle (12).

19. Dispositif de production de céramique dentaire selon l'une des revendications précédentes, **caractérisé en ce que** le canal d'alimentation (22) est constitué d'un matériau polymère, par exemple du polyacrylique, et présente un point de rupture prédéterminé (72) en particulier à la transition entre la rainure de fixation (24) et le canal d'alimentation libre (22).
